# FASCICULE DE BREVET EUROPEEN

(11) **EP 0 956 370 B1**
(45) Date de publication et mention de la délivrance du brevet: **31.10.2001**
(21) Numéro de dépôt: 97905200.8
(22) Date de dépôt: 13.02.1997
(51) Int. Cl.: C22C 11/06, H01M 4/68

(54) **ALLIAGES PLOMB-CALCIUM, NOTAMMENT POUR GRILLES D'ACCUMULATEURS**
BLEI-CALCIUM LEGIERUNGEN, INSBESONDERE AKKUMULATORENGITTER
LEAD-CALCIUM ALLOYS, PARTICULARLY FOR BATTERY GRIDS

(30) Priorité: 16.02.1996 FR 9601976
(43) Date de publication de la demande: 17.11.1999
(73) Titulaire: METALEUROP S.A., 94120 Fontenay-sous-Bois (FR)
(72) Inventeur: ALBERT, Luc, F-78990 Elancourt (FR); GOGUELIN, Alain, F-28170 Châteauneuf-en-Thymerais (FR); CAILLERIE, Jean-Louis, F-59500 Douai (FR)
(74) Mandataire: Texier, Christian
(86) Numéro de dépôt international: FR9700277
(87) Numéro de publication internationale: WO9730183

(56) Documents cités:
- EP-A- 0 040 951
- FR-A- 2 341 660
- US-A- 2 170 650
- US-A- 4 137 378

## Description

La présente invention concerne les alliages plomb-calcium-aluminium, utilisés principalement dans la fabrication des grilles d'accumulateurs au plomb acide qui composent les batteries de démarrage dites "sans entretien".

Depuis une vingtaine d'années, la substitution de l'antimoine par le calcium et par l'étain dans le plomb constituant ces grilles a entraîné la mise sur le marché automobile d'une quantité croissante de batteries d'accumulateurs de plus grande longévité et présentant une consommation négligeable en électrolyte.

En effet, le calcium confère au plomb des propriétés mécaniques très intéressantes et l'étain, tout en durcissant également le plomb, favorise un meilleur transfert énergétique lors des cycles de décharge-charge répétés que subit la batterie tout au long de sa vie.

Les fabricants d'alliages plomb-calcium (Pb-Ca) et plomb-calcium-étain (Pb-Ca-Sn) ajoutent également une petite quantité d'aluminium destinée à protéger les bains de préparation de l'alliage de l'oxydation massive, laquelle consomme majoritairement du calcium aux dépens du plomb.

Les alliages plomb-calcium-aluminium (Pb-Ca-Al), avec ou sans étain, sont utilisés pour la fabrication de grilles négatives d'accumulateurs, tandis que les alliages plomb-calcium-aluminium-étain (Pb-Ca-Al-Sn) sont utilisés pour la fabrication de grilles positives.

La fabrication d'une batterie d'accumulateurs est une succession d'un grand nombre d'opérations, dont certaines se déroulent entre 60 et 80°C sur des périodes allant de vingt-quatre à quarante-huit heures. Ces opérations permettent de donner à l'alliage et à la matière active toutes les propriétés qui leur seront, par la suite, nécessaires pour un fonctionnement correct de la batterie.

Le développement des nouveaux procédés de fabrication en continu des grilles d'accumulateurs a, d'autre part, fait naître un besoin récent en nouveaux matériaux répondant aux spécifications des nouvelles machines de coulée et d'expansion et permettant la réalisation de grilles positives ou négatives de bonne qualité.

Pour les grilles négatives, la tendance est au développement d'alliages plomb-calcium-aluminium à faibles teneurs en étain durcissant rapidement au cours du temps, ce qui permet d'augmenter la productivité des machines de coulée. Ils doivent, en outre, posséder des propriétés mécaniques supérieures à celles de la génération précédente, afin de permettre une réduction de l'épaisseur de la grille et donc une réduction du poids de la batterie sans, pour autant, altérer la tenue mécanique de la plaque négative.

Pour les grilles positives, la tendance est au développement d'alliages plomb-calcium-aluminium-étain résistant aux phénomènes de corrosion et de passivation qui se déroulent dans la plaque positive. Ils doivent également posséder une dureté ou une résistance à la traction suffisamment élevée, afin de résister, pendant toute la durée de vie de la batterie, aux contraintes mécaniques qui s'exercent dans la plaque positive.

En effet, la fabrication de grilles positives et négatives pour accumulateurs requiert une attention particulière pendant la première étape d'empâtage. Lors de cette opération, la grille fraîchement coulée doit, en effet, être suffisamment rigide pour ne pas se déformer sous la pression d'application de la pâte d'oxyde de plomb qui vient remplir la grille. La famille des alliages plomb-calcium-aluminium-étain étant connue pour ses propriétés de durcissement à température ambiante, processus dont la cinétique peut être plus ou moins rapide, le savoir-faire du fabricant d'accumulateurs et de son fournisseur est constamment sollicité pour optimiser le rendement et la qualité de la fabrication. Une des méthodes consiste à prévoir le stockage temporaire des grilles (grilles individuelles ou ensemble de rouleaux), afin de laisser au phénomène de durcissement le temps de se développer. L'utilisation d'un alliage de plomb à cinétique rapide de durcissement devrait permettre de réduire la durée de stockage des grilles.

Par ailleurs, la déformation, voire la rupture définitive des grilles pendant leur utilisation en batterie demeure l'un des principaux problèmes de qualité auxquels les fabricants de batteries sont confrontés. Ce problème, particulièrement sensible dans le cas des grilles positives soumises à d'intenses contraintes mécaniques et chimiques (corrosion en milieu sulfurique), nécessite le développement d'alliages résistant bien à la corrosion en milieu sulfurique et dont les propriétés mécaniques sont élevées et restent constantes au cours du temps.

Journal of Power Sources, vol. 33 (1991), no. 1-4, pp. 13-20, divulgue des alliages Pb-Ca-Al-Sn pour la fabrication de grilles d'accumulateurs au plomb acide. Une addition de baryum dans ces alliages n'est pas mentionnée.

Il est, d'autre part, reconnu qu'un des moyens les plus simples pour réduire la sensibilité des grilles fines d'accumulateurs à la corrosion aux joints de grains est d'utiliser, pour leur fabrication, des alliages se solidifiant avec une structure cristallographique à petits grains, puisque ce type de structure est réputé moins sensible à la corrosion aux joints de grains.

Afin de répondre à ces problèmes, l'addition de baryum dans des alliages plomb-calcium-étain a déjà fait l'objet de travaux antérieurs cités, par exemple, dans les brevets FR-A-851 686, DE-26 11 575, DE-26 19 113, EP-A-040 951, DE-29 21 290, GB-1 59.7 270, GB-1 304 095. Cependant, s'il est effectivement mentionné que la présence de baryum améliore sensiblement la tenue mécanique de grilles coulées (résistance mécanique et fluage) tout en ne dégradant pas leur tenue à la corrosion, les teneurs relatives en poids en baryum proposées sont toujours supérieures à 0,025 %. On relève, par exemple, 0,05 à 0,5 % baryum pour DE-26 19 113 et DE-26 11 575 ; 0,026 à 0,044 % en substitution complète du calcium pour GB-1 597 270 et DE-29 21 290 ; 0,025 à 0,1 % baryum avec systématiquement du strontium entre 0,15 et 0,4 % et une teneur en calcium de 0,03 à 0,04 % pour EP-A-040 951 et/ou associés à d'autres ajouts (magnésium, lithium). Le brevet US-A-4137378 propose des alliages plomb-calcium-strontium-étain et joue sur les proportions de calcium et de strontium, sans aucune trace de baryum. Le brevet US-A-2170650 propose des alliages plomb-calcium-baryum avec une valeur moyenne de baryum de 0,02 % sans aluminium ni étain et avec préférentiellement du strontium. Le brevet FR-A-2341660 propose des alliages plomb-strontium-étain-aluminium, sans baryum.

Incidemment, on peut noter que le brevet FR-A-851 686 préconise un alliage à teneurs très élevées en baryum pour réaliser des coussinets de chemin de fer. Il est fait référence, par exemple, à un alliage plomb-calcium-baryum contenant de 0,1 % à 2 % de calcium ; de 0,5 % à 10 % d'étain et de 0,02 % à 0,1 % de baryum. Il est indiqué, dans ce brevet, que cet alliage présente de très bonnes propriétés de résistance à la corrosion en milieu organique-(huiles).

Une référence à des alliages à de faibles teneurs en baryum provient de GB-1 304 095 qui cite, globalement, les effets bénéfiques d'une addition de 0,001 à 1 % baryum, mais dans un alliage ne contenant pas de calcium.

Une étude exhaustive des documents précédents montre que la plupart des études effectuées par le passé concernaient des alliages aveç ou sans calcium et à fortes teneurs en baryum (supérieure ou égale à 0,02 %).

La Demanderesse a découvert, de façon surprenante et inattendue, qu'en diminuant la teneur en baryum, les propriétés de ces alliages étaient radicalement améliorées par rapport aux alliages connus, notamment pour leur rapidité de durcissement, leur dureté élevée et leur capacité à conserver des propriétés mécaniques constantes au cours du temps.

La présente invention propose ainsi de nouveaux alliages du type précité dans lesquels la concentration relative en poids en baryum est inférieure à 0,02 %.

Plus précisément, la présente invention propose ainsi un alliage de plomb pour grilles d'accumulateurs au plomb acide comprenant du calcium, à une concentration relative en poids comprise entre 0,05 % et 0,12 %, de l'étain, à une concentration relative en poids inférieure à 3 %, de l'aluminium, à une concentration relative en poids comprise entre 0,002 % et 0,04 %, moins de 0,025% de bismuth, moins de 0,005% d'argent, et du baryum, caractérisé par le fait qug la concentration relative en poids en baryum est au moins égale à 0,0015 % et inférieure à 0,02 %.

Un alliage de plomb selon l'invention présentant une concentration relative en poids en étain inférieure à 0,75 % et une concentration relative en poids en baryum comprise entre 0,0015 % et 0,015 %, afin d'obtenir un alliage à durcissement rapide, est destiné préférentiellement à des grilles négatives.

Le rôle du baryum dans cette famille d'alliages est d'accélérer notablement les cinétiques de durcissement immédiatement après coulée et d'augmenter sensiblement la dureté maximale de l'alliage.

Un alliage de plomb selon l'invention présentant une concentration relative en poids en étain comprise entre 0,75 % et 1,5 %, une concentration relative en poids en baryum au moins égale à 0,0015 % et inférieure à 0,02 %, est destiné préférentiellement à des grilles positives.

Avantageusement, la concentration relative en poids en calcium est comprise entre 0,06 et 0,085 % et la concentration relative en poids en étain est comprise entre 0,9 et 1,4 %.

L'addition de baryum dans cette seconde famille d'alliages permet, au métal, de conserver des propriétés mécaniques élevées pendant toute la durée de vie de la batterie et favorise, à la solidification, la formation d'une structure cristalline fine.

Selon l'invention, l'alliage peut comporter, en outre, du bismuth à une concentration relative en poids au moins égale à 0,001 % et inférieure à 0,025 %, ou encore de l'argent à une concentration relative en poids inférieure à 0,005 % et, de préférence au moins égale à 0,0005 % et inférieure à 0,005 %.

La présence de bismuth ou d'argent n'est pas gênante et n'a pas de conséquence sur la dureté de l'alliage.

L'invention concerne également les grilles d'accumulateurs au plomb acide comprenant une partie en alliage de plomb décrit ci-dessus, ainsi que les accumulateurs au plomb acide comprenant au moins une de ces grilles.

La description qui va suivre, en se référant aux figures et aux exemples joints, qui comparent les propriétés d'un même alliage dopé ou non avec du baryum, fera mieux comprendre comment l'invention peut être réalisée. Ces exemples illustrent les excellentes propriétés des alliages PbCaSnAl contenant de faibles quantités de baryum, par opposition aux mêmes alliages sans baryum.

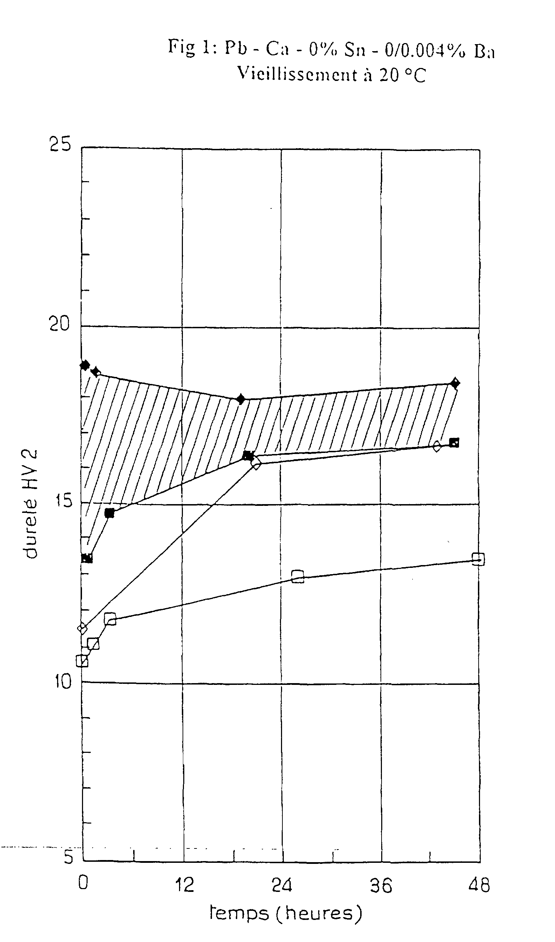

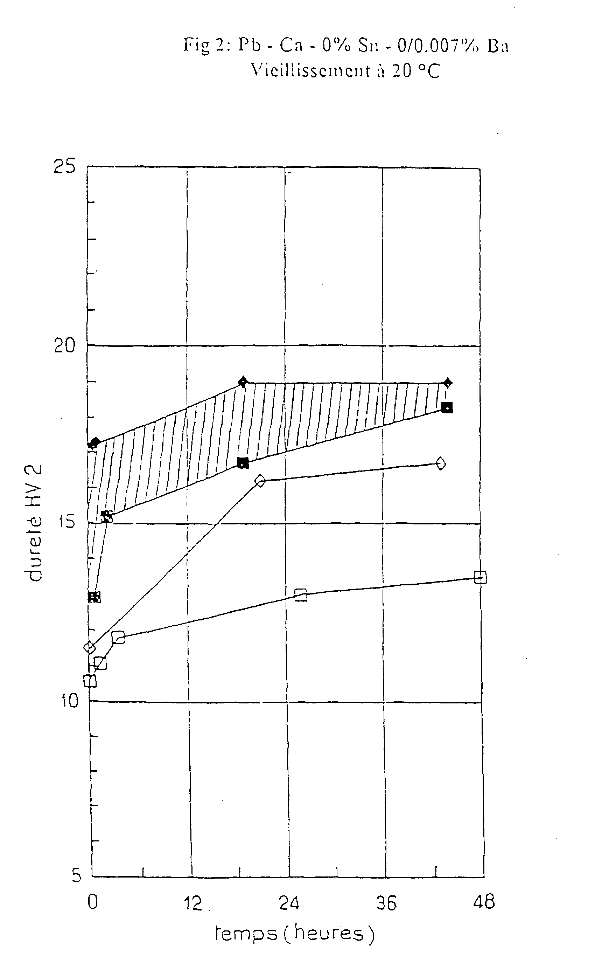

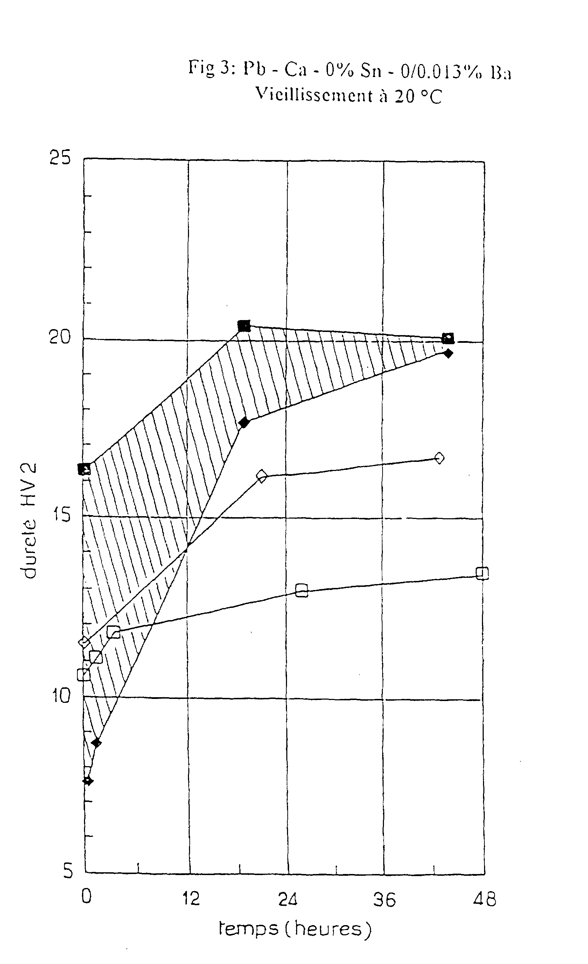

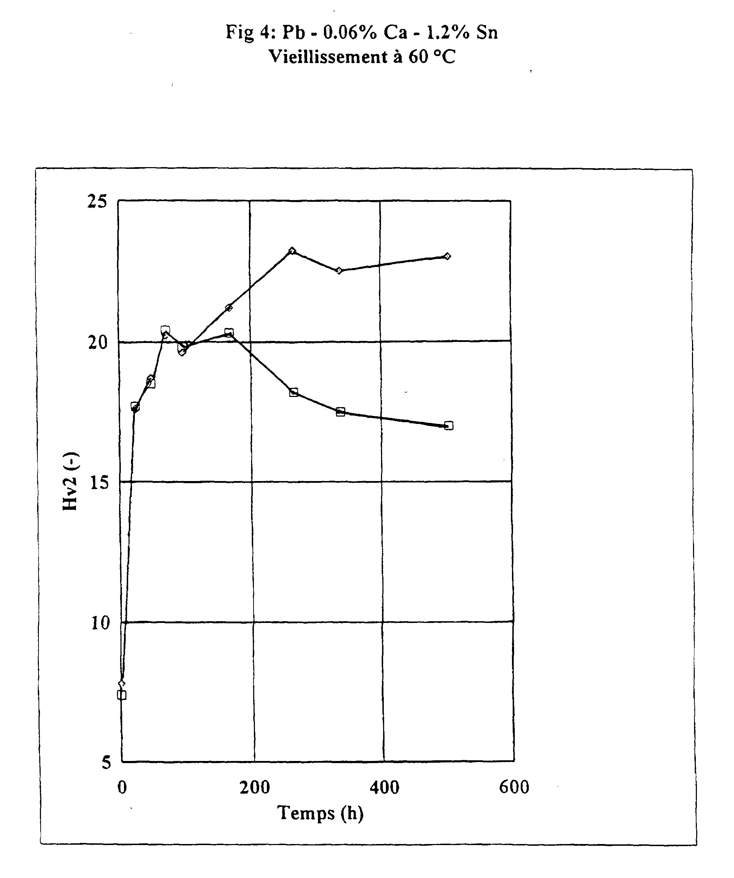

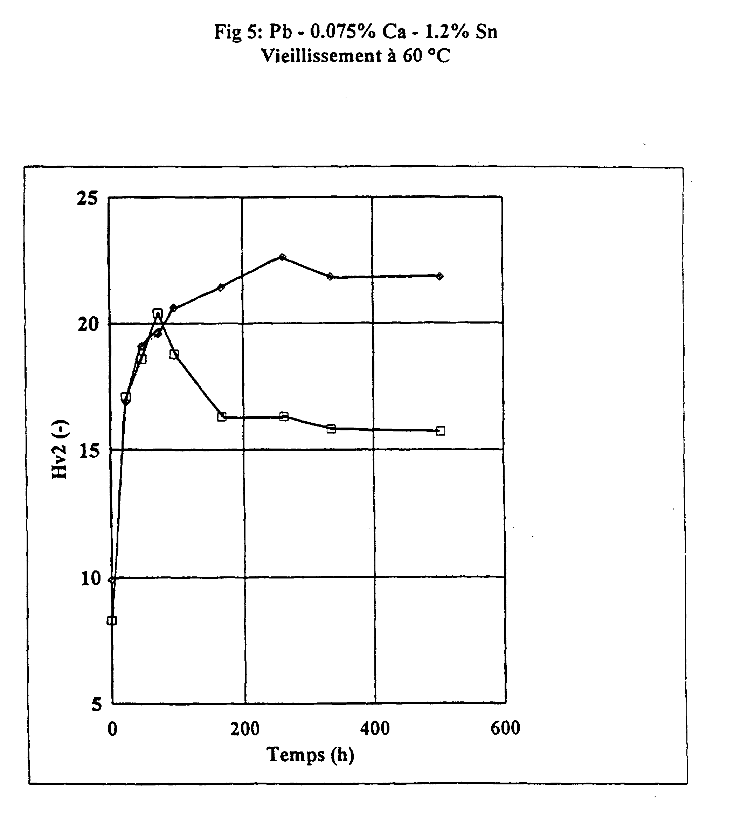

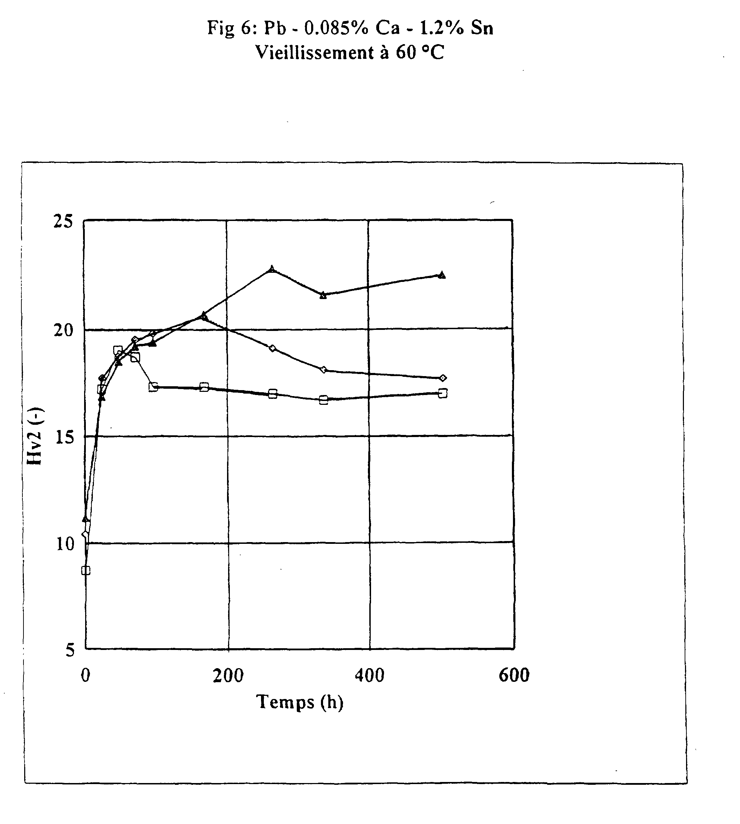

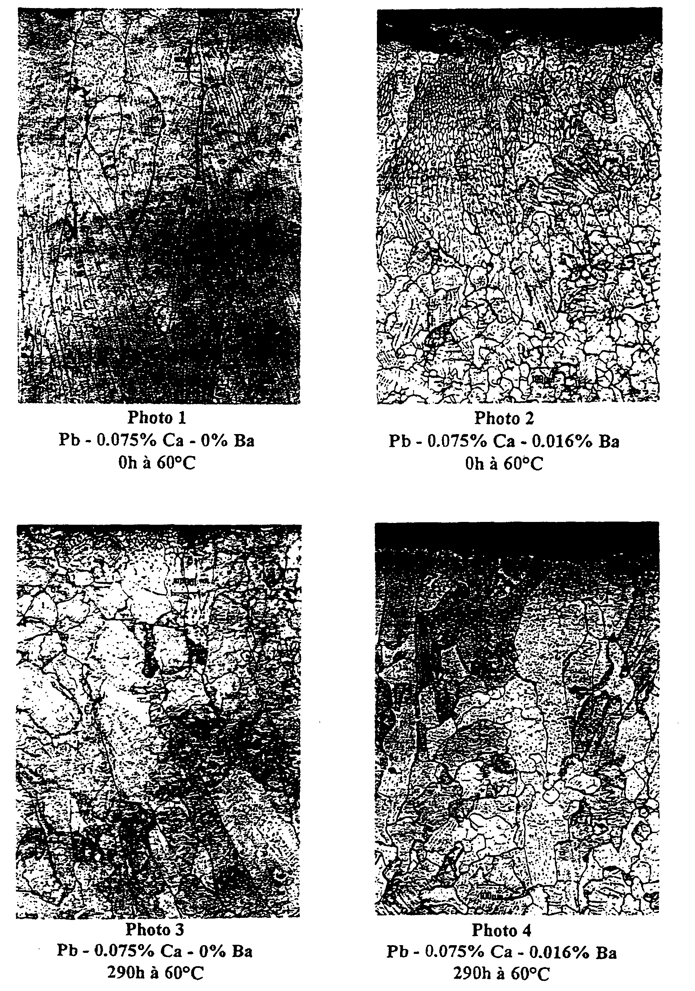

D'autres aspects, buts et avantages de la présente invention apparaîtront mieux à la lecture de la description détaillée suivante, faite en référence aux dessins annexés, sur lesquels :
. La figure 1 représente l'évolution de la dureté Vickers en fonction du temps, à 20°C, pour des alliages PbCaAl comprenant 0,056 % et 0,099 % de calcium, dopés ou non avec 0,004 % baryum ;
. la figure 2 représente l'évolution de la dureté Vickers en fonction du temps, à 20°C, pour des alliages PbCaAl comprenant 0,056 % et 0,099 % de calcium, dopés ou non avec 0,007 % baryum ;
. la figure 3 représente l'évolution de la dureté Vickers en fonction du temps, à 20 °C, pour des alliages PbCaAl comprenant 0,056 % et 0,099 % de calcium, dopés ou non avec 0,013 % baryum ;
. la figure 4 représente l'évolution de la dureté Vickers en fonction du temps, à 60°C, pour des alliages PbCaSnAl comprenant 0,06 % de calcium ; 1,2 % d'étain dopés ou non avec 0,008 % baryum ;
. la figure 5 représente l'évolution de la dureté Vickers en fonction du temps, à 60°C, pour des alliages PbCaSnAl comprenant 0,075 % de calcium ; 1,2 % d'étain, dopés ou non avec 0,008 % baryum ;
. la figure 6 représente l'évolution de la dureté Vickers en fonction du temps, à 60°C, pour des alliages PbCaSnAl comprenant 0,085 % de calcium; 1,2 % d'étain, dopés ou non avec 0,008 % et 0,016 % baryum.

### EXEMPLES

On prépare des alliages de la famille PbCaAl et PbCaSnAl éventuellement dopés en baryum. On mesure la dureté Vickers de ces alliages en fonction de la concentration en baryum. On compare enfin ces mesures de dureté pour une même famille d'alliages suivant la concentration en baryum.

Les alliages sont réalisés de la façon suivante :

On utilise, comme alliage de base, des alliages commerciaux de seconde fusion. La composition relative en poids de ces alliages est indiquée dans les tableaux I et II. On ajoute du plomb dit doux (de première fusion). Sa composition est donnée dans le tableau III. On ajoute également des alliages-mères Pb-19 % Sn, Pb-0,4 % Ba et Pb-0,14 % Ca-0,13 % Ba suivant les cas.

Dans l'ensemble des tableaux, les compositions sont exprimées en pourcentages relatifs en poids.

On mélange tous ces composants à une température comprise entre 550 et 600°C dans l'air jusqu'à la coulée.

On réalise une coulée sous forme de plaques 130 mm x 70 mm x 3 mm dans un moule en cuivre dont la température initiale est la température ambiante.

L'analyse chimique de ces plaques, et notamment àu baryum, a été contrôlée systématiquement par spectrométrie d'étincelle étalonnée sur des alliages Pb-Ba à très faibles teneurs en baryum.

On mesure, pour chaque composition, l'évolution de la dureté Vickers après solidification au cours d'une période dite de vieillissement. Ce vieillissement se fait à 20°C, sur des périodes allant de 0 à 6600 heures (h), pour les alliages à durcissement rapide et à 60°C, sur des périodes allant de 0 à 400 h, pour les alliages destinés à l'élaboration de grilles positives. Les phases de vieillissement à 20°C simulent les phases de refroidissement et de stockage des grilles après coulée mais avant empâtage. Les phases de vieillissement à 60°C reproduisent des conditions industrielles d'empâtage, de mûrissage et de formation et permettent de simuler artificiellement les phénomènes qui se produisent dans les plaques positives au cours de la durée de vie d'une batterie.

Les résultats obtenus sur les alliages à vitesse de durcissement rapide sont indiqués dans les tableaux IV à VII ci-après. Tous les pourcentages exprimés dans ces tableaux sont aussi des pourcentages relatifs en poids, tandis que la dureté Vickers, exprimée en unité Hv2, a été mesurée pour une charge de 2 kg.
- Le tableau IV indique les duretés Vickers (Hv2) de l'alliage Pb-0,065 % Ca-0,008 % Al diversement dopé en baryum, pour différents temps de vieillissement à 20°C.
- Le tableau V indique les duretés Vickers (Hv2) de l'alliage Pb-0,099 % Ca-0,008 % Al diversement dopé en baryum, pour différents temps de vieillissement à 20°C.
- Le tableau VI indique les duretés Vickers (Hv2) de l'alliage Pb-0,099 % Ca-0,6 % Sn- 0,008 % Al diversement dopé en baryum, pour différents temps de vieillissement à 20°C.
- Le tableau VII indique les duretés Vickers (Hv2) de différents alliages Pb-x % Ca- 0,008 % Al, avec différentes teneurs (x) en calcium, dopés ou non avec 0,015 % de baryum après 288 h ou 6600 h à 20°C.

Pour chacun des tableaux IV, V, VI et VII, on remarque que :
. La dureté des alliages est toujours plus élevée en présence de baryum (entre 0,002 % et < 0,02 %) qu'en absence de baryum.
. La dureté des alliages peut atteindre 20 Hv2 en présence de baryum.
. La dureté augmente toujours plus rapidement avec le temps de vieillissement à 20°C en présence de baryum (entre 0,002 % et 0,015 %) qu'en absence de baryum.
. Les alliages dopés en baryum conservent des duretés très élevées même après des temps de vieillissement particulièrement longs (6600 h soit 275 jours).

Ces tableaux illustrent les excellentes qualités en terme de dureté et de vitesse de durcissement des alliages PbCaSnAl selon l'invention.

Sur chacune des figures 1 à 3, on a représenté pour deux alliages de PbCaSnAl, l'évolution de la dureté Vickers en fonction du temps selon que l'alliage est dopé ou non en baryum.

Pour chacune de ces figures, les symboles lorsqu'ils sont vides, correspondent à des alliages non dopés et lorsqu'ils sont pleins à des alliages dopés.

Sur les figures 1 à 3, il apparaît que, lorsque les alliages sont conformes aux caractéristiques de la présente invention, l'addition de faibles quantités de Ba permet :
- d'augmenter la dureté initiale de l'alliage,
- d'augmenter la dureté maximale de l'alliage,
- d'accélérer la cinétique de durcissement de l'alliage.

Il s'ensuit que l'ajout de baryum, dans les alliages PbCaSnAl selon l'invention, a pour effet à la fois d'augmenter les duretés initiales et maximales des alliages destinés à l'élaboration de grilles pour accumulateurs et d'accélérer la cinétique de durcissement des alliages, ce qui permet d'atteindre plus rapidement la dureté minimale nécessaire à l'opération d'empâtage.

Les résultats obtenus sur les alliages destinés à l'élaboration des grilles positives sont indiqués dans les tableaux VIII à XI ci-après. Tous les pourcentages exprimés dans les tableaux sont des pourcentages en poids. La dureté vickers, exprimée en unités Hv2, a été mesurée pour une charge de 2 kg tandis que les tests de traction ont été réalisés avec une vitesse de traction de 10 mm/min.
- Le tableau VIII indique les duretés Vickers (Hv2) de l'alliage Pb-0,06 % Ca-1,2 % Sn- 0,008 % Al diversement dopé en baryum, pour différents temps de vieillissement à 60°C.
- Le tableau IX indique les duretés Vickers (Hv2) de l'alliage Pb-0,075 % Ca-1,2 % Sn- 0,008 % Al diversement dopé en baryum, pour différents temps de vieillissement à 60°C.
- Le tableau X indique les duretés Vickers (Hv2) de l'alliage Pb-0,085 % Ca-1,2 % Sn- 0,008 % Al diversement dopé en baryum, pour différents temps de vieillissement à 60°C.
- Le tableau XI indique la résistance à la rupture Rm (MPa) mesurée lors de tests de traction sur des échantillons d'alliage Pb-0,075 % Ca-1,2 % Sn-0,008 % Al diversement dopés en baryum, pour différents temps de vieillissement à 60°C.

Pour l'ensemble de ces tableaux encore, les concentrations sont des concentrations relatives en poids.

Sur les tableaux VIII, IX, X et XI, on remarque que :
- la dureté des alliages, immédiatement après coulée, est plus élevée en présence de baryum (entre 0,002 % et 0,018 %) qu'en absence de baryum ;
- la dureté des alliages passe par un maximum puis décroît en absence de baryum ; croît et reste stable à un niveau élevé en présence de baryum ;
- la résistance à la traction des alliages passe par un maximum puis décroît en absence de baryum ; croît et reste stable à un niveau élevé en présence de baryum ;
- la dureté maximale peut atteindre 23 Hv2 en présence de baryum ;
- la résistance à la traction peut atteindre 60 MPa en présence de baryum.

Ces tableaux illustrent les excellentes qualités en terme de dureté, de résistance à la traction, de vitesse de durcissement et de stabilité dans le temps des alliages PbCaSnAl, lorsque leurs concentrations sont conformes aux caractéristiques de la présente invention.

Sur chacune des figures 4 à 6, on a représenté, pour un alliage de PbCaSnAl, l'évolution de la dureté Vickers en fonction du temps suivant que l'alliage est dopé ou non en Ba.

Pour chacune de ces figures, les symboles, lorsqu'ils sont vides, correspondent à des alliages non dopés et lorsqu'ils sont pleins à des alliages dopés.

Sur les figures 4 à 6, il apparaît que, lorsque les alliages sont conformes à l'invention, l'addition de faibles quantités de baryum permet :
- d'augmenter la dureté initiale de l'alliage à l'instant t = 0 ;
- de stabiliser, dans le temps, la dureté et la résistance à la traction de l'alliage à une valeur élevée.

Sur les photos 1 à 4, on a représenté les microstructures d'alliages Pb-0,075 % Ca-1,2 % Sn- 0,008 % Al, dopés ou non avec 0,016 % de baryum, immédiatement après coulée (photos 1 et 2) et après une période vieillissement de 270 h à 60°C (photos 3 et 4). Ces photos ont été prises sur des coupes polies prélevées dans une même plaque d'alliage coulée à 600°C dans un moule en cuivre de 3 mm d'épaisseur.

Sur chacune de ces photos, la bande noire, en haut de la photo, correspond à l'extrémité de la plaque en contact avec le moule.

La comparaison des photos 1 et 2 et, 3 et 4 fait apparaître que, lorsque les alliages sont conformes aux caractéristiques de la présente invention, l'addition de faibles quantités de baryum permet :
- de transformer la structure de coulée à gros grains, caractéristique de ce type d'alliage en une structure à grains plus fins (photos 1 et 2) ;
- d'annihiler le phénomène, dit de survieillissement, de précipitation lamellaire à l'intérieur des grains, clairement visible sur les alliages ne contenant pas de baryum (photos 3 et 4) ;
- de favoriser la formation d'une structure cristallographique à grains plus fins qui reste stable au cours du temps (photos 3 et 4).

Il s'ensuit que les alliages selon l'invention présentent une quantité de baryum qui a pour effet, à la fois, d'augmenter la dureté initiale de l'alliage et de rendre l'alliage PbCaSnAl moins sensible aux phénomènes de survieillissement qui se traduisent par une transformation de la structure cristallographique de l'alliage et par une chute de propriétés mécaniques de l'alliage au cours du temps.

Bien que la Demanderesse ne dispose pas à ce jour d'explication théorique complète et ne privilégie aucune piste, on constate que les excellents résultats obtenus sur les alliages PbCaSnAl apparaissent pour des teneurs en baryum inférieures à la limite de solubilité dans le plomb doux. Il est donc possible qu'il existe une synergie entre le calcium et le baryum, ce dernier pouvant, par exemple, aider à mieux répartir la sursaturation en calcium dans la matrice plombifère, ce qui améliore les processus de durcissement de l'alliage. Cette synergie n'apparaîtrait que lorsque le baryum est en solution solide, c'est-à-dire lorsque sa teneur est inférieure à la limite de solubilité, soit d'après J.L. Dawson ("The Electrochemistry of Lead"; Ed. Kuhn, Academic Press, 1979, p.309) 0,02 % à 25°C dans le plomb doux.

**Tableau I**

| Composition d'un des alliages commerciaux de base | | | | |
|---|---|---|---|---|
| Element | Teneur Minimale | Teneur Maximale | | |
| Argent | - | 0.0050 | Ag | (%) |
| Bismuth | - | 0.0300 | Bi | (%) |
| Arsenic | - | 0.0020 | As | (%) |
| Cadmium | - | 0.0010 | Cd | (%) |
| Cuivre | - | 0.0050 | Cu | (%) |
| Nickel | - | 0.0020 | Ni | (%) |
| Antimoine | - | 0,0010 | Sb | (%) |
| Etain | - | 0.0500 | Sn | (%) |
| Zinc | - | 0.0010 | Zn | (%) |
| Tellure | - | 0.0010 | Te | (%) |
| Selenium | - | | Se | (%) |
| Soufre | - | | S | (%) |
| Calcium | 0 1000 | 0.1400 | Ca | (%) |
| Aluminium | 0.0150 | 0.0250 | Al | (%) |
| Sodium | - | | Na | (%) |
| Magnesium | - | | Mg | (%) |
| Fer | - | 0.0050 | Fe | (%) |
| Cobalt | - | | Co | (%) |

**Tableau II**

| Composition d'un des alliages commereiaux de base | | | | |
|---|---|---|---|---|
| Element | Teneur Minimale | Teneur Maximale | | |
| Argent | - | 0.0040 | Ag | (%) |
| Bismuth | - | 0.0180 | Bi | (%) |
| Arsenic | - | 0.0030 | As | (%) |
| Cadmium | - | 0.0010 | Cd | (%) |
| Cuivre | - | 0.0005 | Cu | (%) |
| Nickel | - | 0.0020 | Ni | (%) |
| Antimoine | - | 0.0010 | Sb | (%) |
| Etain | 0.5500 | 0.6500 | Sn | (%) |
| Zinc | - | 0.010 | Zn | (%) |
| Tellure | - | 0.0010 | Te | (%) |
| Selenium | - | | Se | (%) |
| Soufre | - | | S | (%) |
| Calcium | 0.1000 | 0.1200 | Ca | (%) |
| Aluminium | 0.0100 | 0.0200 | Al | (%) |
| Sodium | - | | Na | (%) |
| Magnesium | - | | Mg | (%) |
| Fer | - | 0.0005 | Fe | (%) |
| Cobalt | - | | Co | (%) |

**Tableau III**

| Composition du plomb dit doux de première fusion | | | | |
|---|---|---|---|---|
| Element | Teneur Minimale | Teneur Maximale | | |
| Argent | - | 0.0010 | Ag | (%) |
| Bismuth | - | 0.0100 | Bi | (%) |
| Arsenic | - | 0.0001 | As | (%) |
| Cadmium | - | 0.0003 | Cd | (%) |
| Antimoine | - | 0.0003 | Sb | (%) |
| Etain | - | 0.0003 | Sn | (%) |
| Zinc | - | 0.0010 | Zn | (%) |
| Cuivre | - | 0.0010 | Cu | (%) |
| Fer | - | 0.0010 | Fe | (%) |

**Tableau IV**

| Pb -0.065 % Ca - 0 %Sn - 0.008 %Al | | | | |
|---|---|---|---|---|
| Temps (h) | Hv2 (vieillissement à 20 °C) | | | |
| | Ba=0% | Ba=0.0015% | Ba=0.004 % | Ba=0.007 % |
| 0.23 | 11.7 | - | 11.5 | 10.5 |
| 2.5 | 12.3 | 15.4 | 15.2 | 16.0 |
| 23 | 13.7 | 15.9 | 18.7 | 16.6 |
| 43 | 14.8 | 16.7 | 18.3 | 17.9 |

**Tableau V**

| Pb -0.099 % Ca - 0 %Sn - 0.008 %.Al | | | | |
|---|---|---|---|---|
| Temps (h) | Hv2 (vieillissement à 20 °C) | | | |
| | Ba=0% | Ba=0.0015% | Ba=0 006 % | Ba=0 008 % |
| 0.25 | 11.5 | 18.9 | 17.2 | 17.2 |
| 2 | - | 18.7 | 16.4 | 16.1 |
| 21 | 16.2 | 18.0 | 17.5 | 17.5 |
| 48 | 16.7 | - | 17.5 | 16.8 |

**Tableau VI**

| Pb -0.0990% Ca - 0.6 %Sn - 0.0080%Al | | | | |
|---|---|---|---|---|
| Temps (h) | Hv2 (vieillissement à 20 °C) | | | |
| | Ba=0% | Ba=0.003 % | Ba=0.006 % | Ba=0 02 % |
| 0.25 | 13.3 | 17.6 | 17.7 | 12.5 |
| 5 | 14.4 | 17.3 | 18.1 | 12.2 |
| 24 | 15.4 | 17.2 | 18.5 | - |
| 48 | 16.0 | 18.4 | 18.5 | - |
| 75 | - | - | - | 15.7 |
| 250 | 18.0 | 19.2 | 21.0 | 17.8 |
| 1000 | - | 21.5 | 22.6 | - |

**Tableau VII**

| Pb - x% Ca - 0 %Sn - 0.0080%Al | | | | | | |
|---|---|---|---|---|---|---|
| Ca (%) | Ba=0% | | | Ba=0.0150% | | |
| Temps (h) Température (°C) | Hv2 < 1 h à 20°C | Hv2 288h à 20°C | Hv2 6600h à 20 °C | Hv2 < 1 h à 20°C | Hv2 288h à 20°C | Hv2 6600h à 20 °C |
| 0.0550 | 11.0 | 13.2 | 12.5 | 9.0 | 20.0 | 16.6 |
| 0.0650 | 12.0 | 14.8 | 13.1 | 15.0 | 20.9 | 17.2 |
| 0.0750 | 12.0 | 16.1 | 14.6 | 16.0 | 20.7 | 17.5 |
| 0.0850 | 13.0 | 17.5 | 14.9 | 18.0 | 21.2 | 17.9 |
| 0.1000 | 14.0 | 15.6 | 14.1 | 18.0 | 21.0 | 17.7 |

**Tableau VIII**

| Pb-0.06 % Ca - 1.2 %Sn - 0.008 %Al | | | | |
|---|---|---|---|---|
| Temps (h) | Hv2 (vieillissement à 60 °C) | | | |
| | Ba=0% | Ba=0.004 % | Ba=0.008 % | Ba=0.015 % |
| 0 | 7.4 | 8.6 | 7.8 | 8.8 |
| 24 | 17.7 | 16.3 | 17.6 | 17.7 |
| 48 | 18.5 | 18.7 | 18.7 | 17.9 |
| 72 | 20.4 | 20.2 | 20.2 | 20.0 |
| 96 | 19.8 | 20.0 | 19.6 | 20.5 |
| 168 | 20.3 | 21.3 | 21.2 | 20.2 |
| 264 | 18.2 | 20.2 | 23.2 | 21.9 |
| 336 | 17.5 | 21.0 | 22.5 | 22.3 |
| 504 | 17.0 | 21.6 | 23.0 | 23.6 |

**Tableau IX**

| Pb -0.075% Ca - 1.2 %Sn -0.008%Al | | | | |
|---|---|---|---|---|
| Temps (h) | Hv2 (vieillissement à 60 °C) | | | |
| | Ba=0% | Ba=0.004 % | Ba=0.008 % | Ba=0.016 % |
| 0 | 8.3 | 8.8 | 9.9 | 10.7 |
| 24 | 17.1 | 17.1 | 16.9 | 17.9 |
| 48 | 18.6 | 19.3 | 19.1 | 18.7 |
| 72 | 20.4 | 19.9 | 19.6 | 19.7 |
| 96 | 18.8 | 19.7 | 20.6 | 21.3 |
| 168 | 16.3 | 20.5 | 21.4 | 21.6 |
| 264 | 16.3 | 18.6 | 22.6 | 23.2 |
| 336 | 15.8 | 17.6 | 21.8 | 23.2 |
| 504 | 15.7 | 16.7 | 21.8 | 23.2 |

**Tableau X**

| Pb -0.0850% Ca - 1.2 %Sn -0.0080%Al | | | | |
|---|---|---|---|---|
| Temps (h) | Hv (vieillissement à 60 °C) | | | |
| | Ba=0% | Ba=0.0040% | Ba=0.0080% | Ba=0.0160% |
| 0 | 8.7 | 9.2 | 10.4 | 11.2 |
| 24 | 17.2 | 17.7 | 17.7 | 16.9 |
| 48 | 19.0 | 18.6 | 18.7 | 18.5 |
| 72 | 18.7 | 18.6 | 19.5 | 19.2 |
| 96 | 17.3 | 17.9 | 19.8 | 19.4 |
| 168 | 17.3 | 18.2 | 20.6 | 20.7 |
| 264 | 17.0 | 17.2 | 19.1 | 22.8 |
| 336 | 16.7 | 16.9 | 18.1 | 21.6 |
| 504 | 17.1 | 16.6 | 17.7 | 22.5 |

**Tableau XI**

| Pb - 0.0750% Ca - 1.2 %Sn Propriétés mécaniques de alliages pour positives | | | | | | |
|---|---|---|---|---|---|---|
| Ba (%) Temps, Température | Hv2 (-) 0h à 60°C | Rm (MPa) 0h à 60°C | Hv2 (-) 72h à 60°C | Rm (MPa) 72h à 60°C | Hv2 (-) 290h à 60°C | Rm (MPa) 290h à 60°C |
| 0 | 8.3 | 20.0 | 20.4 | 50.3 | 16.3 | 40.7 |
| 0.0037 | 8.8 | 22.3 | 19.9 | 50.0 | 18.6 | 51.3 |
| 0.0086 | 9.9 | 20.0 | 19.6 | 49.7 | 22.6 | 56.0 |
| 0.0166 | 10.7 | 22.7 | 19.7 | 50.0 | 23.2 | 60.0 |

### Légende des figures

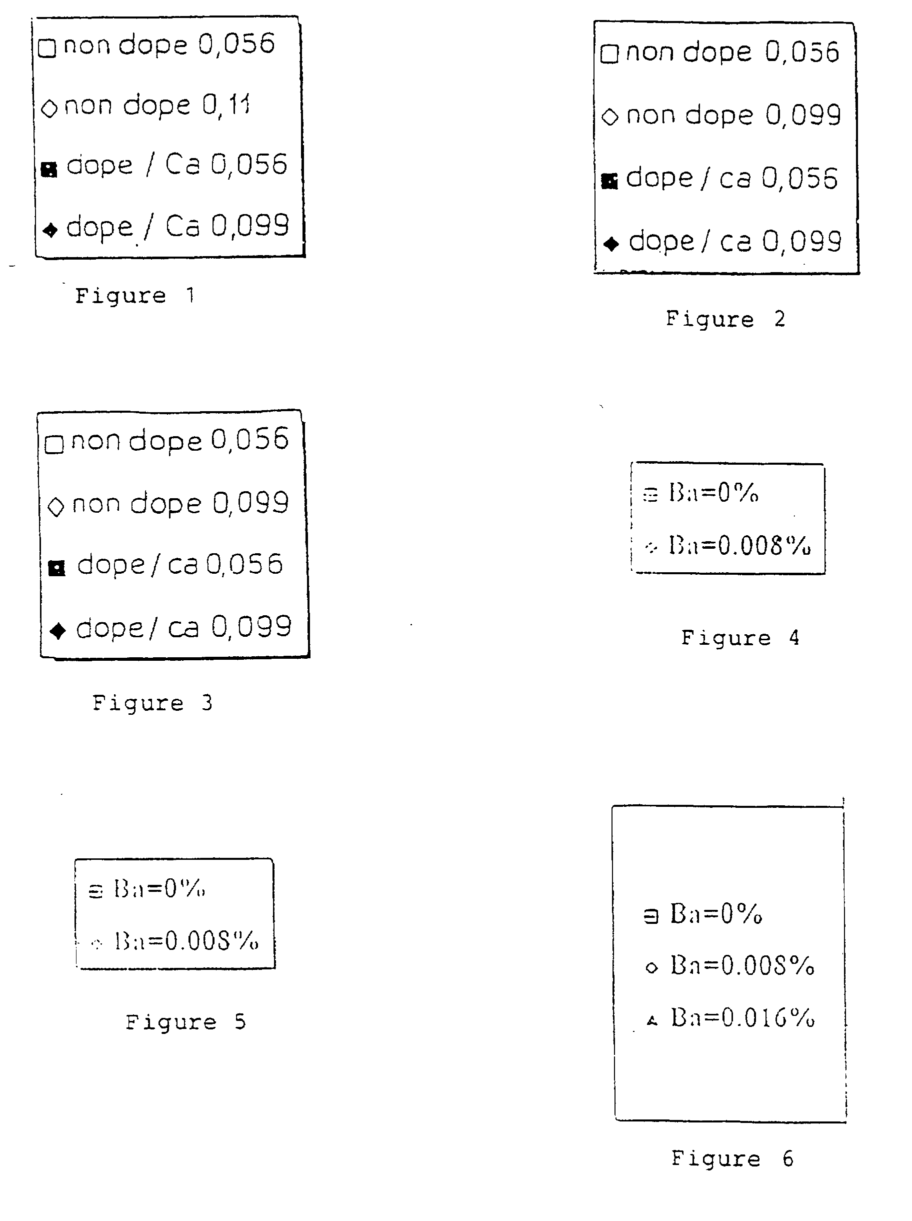

## Revendications

1. Alliage de plomb pour grilles d'accumulateurs au plomb acide comprenant, en concentration relative en poids, de 0,05 à 0,12 % de calcium, de 0 à 3 % d'étain, de 0,002 à 0,04 % d'aluminium, moins de 0,025 % de bismuth, moins de 0,005 % d'argent, du baryum dans une concentration au moins égale à 0,0015 % et inférieure à 0,02 %, le solde étant constitué de plomb.

2. Alliage de plomb selon la revendication 1, **caractérisé par le fait que** la concentration relative en poids en étain est inférieure à 0,75 % et la concentration relative en poids en baryum est comprise entre 0,0015 % et 0,015 %, afin d'obtenir un alliage à durcissement rapide, destiné notamment à des grilles négatives.

3. Alliage de plomb selon la revendication 1, **caractérisé par le fait que** la concentration relative en poids en étain est comprise entre 0,75 % et 1,5 %, la concentration relative en poids en baryum est au moins égale à 0,0015 % et inférieure à 0,02 %, cet alliage étant destiné à des grilles positives.

4. Alliage de plomb selon la revendication 3,
**caractérisé par le fait que** la concentration relative en poids en calcium est comprise entre 0,06 et 0,085 % et la concentration relative en poids en étain est comprise entre 0,9 et 1,4 %.

5. Alliage de plomb selon l'une quelconque des revendications précédentes, **caractérisé par le fait qu'**il comprend, en outre, du bismuth à une concentration relative en poids au moins égale à 0,001 % et inférieure à 0,025 %.

6. Alliage de plomb selon l'une quelconque des revendications précédentes, **caractérisé par le fait qu'**il comprend, en outre, de l'argent, à une concentration relative en poids inférieure à 0,005 % et, de prëférence, au moins égale à 0,0005 % et inférieure à 0,005 %.

7. Grille d'accumulateur au plomb acide, **caractérisée par le fait qu'**elle comprend une partie en alliage de plomb selon l'une quelconque des revendications précédentes.

8. Accumulateur au plomb acide, **caractérisé par le fait qu'**il comprend au moins une grille selon la revendication 7.

## Claims

1. Lead alloy for lead-acid battery grids, containing, in relative concentration by weight, from 0.05% to 0.12% calcium, from 0 to 3% tin, from 0.002 to 0.04% aluminum, less than 0.025% bismuth, less than 0.005% silver, and barium in a concentration at least equal to 0.015% and less than 0.02%, the balance consisting of lead.

2. Lead alloy according to Claim 1, **characterized in that** the relative concentration by weight of tin is less than 0.75% and the relative concentration by weight of barium is between 0.0015% and 0.015%, so as to obtain a rapidly hardening alloy intended especially for negative grids.

3. Lead alloy according to Claim 1, -**characterized in that** the relative concentration by weight of tin is between 0.75% and 1.5% and the relative concentration by weight of barium is at least 0.0015% and less than 0.02%, this alloy being intended for positive grids.

4. Lead alloy according to Claim 3, **characterized in that** the relative concentration by weight of calcium is between 0.06 and 0.085% and the relative concentration by weight of tin is between 0.9 and 1.4%.

5. Lead alloy according to any one of the preceding claims, **characterized in that** it furthermore contains bismuth with a relative concentration by weight of at least 0.001% and less than 0.025%.

6. Lead alloy according to any one of the preceding claims, **characterized in that** it furthermore contains silver with a relative concentration by weight of less than 0.005% and preferably of at least 0.0005% and less than 0.005%.

7. Lead-acid battery grid, **characterized in that** it comprises a part made of a lead alloy according to any one of the preceding claims.

8. Lead-acid battery, **characterized in that** it comprises at least one grid according to Claim 7.

## Patentansprüche

1. Bleilegierung für die Gitter von Blei-Säure Akkumulatoren, welche in einer relativen Gewichtskonzentration 0,05 bis 0,12 % Kalzium, 0 bis 3 % Zinn, 0,002 bis 0,04 % Aluminium, weniger als 0,025 % Wismut, weniger als 0,005 % Silber, Barium in einer Konzentration von wenigstens gleich 0,0015 % und weniger als 0,02 % und als Restbestandteil Blei enthält.

2. Bleilegierung nach Anspruch 1, **dadurch gekennzeichnet, daß** die relative Gewichtskonzentration von Zinn unter 0,75 % liegt und die relative Gewichtskonzentration von Barium zwischen 0,0015 % und 0,015 % liegt, um eine Legierung mit schneller Härtung zu erhalten, die insbesondere für die negativen Gitter bestimmt ist.

3. Bleilegierung nach Anspruch 1, **dadurch gekennzeichnet, daß** die relative Gewichtskonzentration von Zinn zwischen 0,75 % und 1,5 % liegt und die relative Gewichtskonzentration von Barium wenigstens bei 0,0015 % und unter 0,02 % liegt, welche Legierung für die positiven Gitter bestimmt ist.

4. Bleilegierung nach Anspruch 3, dadurch gekennzeichent, daß die relative Gewichtskonzentration von Kalzium zwischen 0,06 und 0,085 % liegt und die relative Gewichtskonzentration von Zinn zwischen 0,9 und 1,4 % liegt.

5. Bleilegierung nach einem der vorhergehenden Ansprüche, **dadurch gekennzeichnet, daß** sie weiterhin Wismut in einer relativen Gewichtskonzentration enthält, die wenigstens bei 0,001 % und unter 0,025 % liegt.

6. Bleilegierung nach einem der vorhergehenden Ansprüche, **dadurch gekennzeichnet, daß** sie weiterhin Silber in einer relativen Gewichtskonzentration enthält, die unter 0,005 % und vorzugsweise wenigstens bei 0,0005 % und unter 0,005 % liegt.

7. Gitter für einen Blei-Säure-Akkumulator, **dadurch gekennzeichnet, daß** es einen Teil aus einer Bleilegierung nach einem der vorhergehenden Ansprüche umfaßt.

8. Blei-säure-Akkumulator, **dadurch gekennzeichnet, daß** er wenigstens ein Gitter nach Anspruch 7 umfaßt.
